# EUROPEAN PATENT APPLICATION

(11) **EP 4 654 064 A1**
(43) Date of publication of application: **26.11.2025**
(21) Application number: 25174294.6
(22) Date of filing: 05.05.2025
(51) Int. Cl.: G06F 21/75, G06F 21/87

(54) **HARDWARE RANDOMIZED BOOT CLOCK**

(30) Priority: 20.05.2024 US 202418669066
(71) Applicant: STMicroelectronics International N.V., 1228 Plan-les-Ouates, Geneva (CH)
(72) Inventor: JAIN, Sandeep, 201301 Noida, Uttar Pradesh (IN); JAIN, Charul, 110051 Delhi (IN)
(74) Representative: Buzzi, Notaro & Antonielli d'Oulx S.p.A.

(57) **Abstract**

A hardware boot circuit includes a random number generator circuit (103) configured to generate random values, a reference clock circuit (107) configured to generate a reference clock signal (127) that includes a series of intervals of fixed size, a clock gate circuit (102) configured to switch off at least one clock pulse in each interval to generate a randomized clock signal (122) at a root node of a clock network, and a boot core circuit (104) configured to use the randomized clock signal (122) to access an internal memory storing boot instructions. Clock pulses that are switched off are randomized by the random values from the random number generator (103). The randomized clock signal (122) or additional randomized clock signals (123, 124) generated by the clock gate circuit (102) may be used to clock peripherals (108) and/or processors (110) of a digital electronic device (100) that includes the hardware boot circuit. The random number generator (103) may include a physical entropy source.

## Description

### TECHNICAL FIELD

The present invention relates generally to securely booting digital electronic devices, and, in particular embodiments, to methods, devices, and systems that generate a randomized boot clock using a hardware circuit.

### BACKGROUND

Digital electronic systems and devices initialize various hardware, firmware, and/or software components using a boot process. Multiple parties and modules may be involved in the booting process, especially in complex systems. For example, hardware begins the booting process (e.g., using a read-only memory (ROM), such as a non-volatile memory (NVM) that stores boot instructions for execution by a hardware bootloader). Various firmware and software may then be initialized up to and including one or more operating systems and applications that run in the operating system environments.

In order to ensure proper operation, it is important for the booting process to authenticate each component at each step of the booting process. This sequential authentication forms a chain-of-trust that allows connecting each component all the way back to the root-of-trust. Hardware is the first step in the booting process and forms the root-of-trust (i.e., the foundational authentication to which all later components can trace back to). For example, the ROM may include an encryption key (e.g., an RSA key) that is checked at the start of the boot process to serve as the basis for the root-of-trust. At each stage of the boot process, secure information (encryption key, digital signature, etc.) can be used to extend the chain-of-trust to higher level components.

Bad actors may attempt to access secure information or unlock restricted functionality of the digital electronic system during the boot process. An attacker may use various active and passive modes of side channel attack at different levels (e.g., chip level, device level, software level, etc.) that leverage physical or logical properties of the system. For example, an attacker may use physical properties of a design to manipulate or extract secure information from a device. In some cases, these physical side channel attacks can be successful even without design/implementation knowledge. Some possible methods include externally manipulating power, voltage, clock, etc.

An attacker may seek to apply an external stimulus to the system during a specific operation of the boot process. However, without knowledge of the system, the specific operation must be identified using some form of analysis. One such analytical tool is power analysis, which analyzes the power signature of the system during the boot process to allow the attacker to pinpoint when a desired operation (e.g., an authentication operation) is taking place. Differential power analysis (DPA) compares multiple traces to statistically determine correlations between the traces and remove system noise. One possible DPA countermeasure is to cause power traces of the same operation to be less similar. Therefore, improved methods, devices, and systems that temporally obfuscate power signatures during the boot process may be desirable.

### SUMMARY

In accordance with an embodiment of the invention, a hardware boot circuit includes a random number generator circuit, a reference clock circuit, a clock gate circuit, and a boot core circuit. The random number generator circuit is configured to generate random values. The reference clock circuit is configured to generate a reference clock signal that includes a series of intervals that each have N clock pulses. *N* is a natural number greater than one. The clock gate circuit is operatively coupled to both the random number generator circuit and the reference clock circuit. The clock gate circuit is configured to switch off at least one clock pulse in each interval of the series of intervals to generate a randomized clock signal at a root node of a clock network. The at least one clock pulse that is switched off in each interval is randomized by the random values from the random number generator circuit. The boot core circuit is operatively coupled to the clock gate circuit and is configured to access an internal memory including boot instructions using the randomized clock signal.

In accordance with another embodiment of the invention, a digital electronic device includes a hardware boot circuit according to one or more embodiments, at least one peripheral, and at least one processor. The at least one peripheral and the at least one processor are operatively coupled to the clock gate circuit. The at least one peripheral or the at least one processor are clocked using the randomized clock signal from the clock gate circuit.

In accordance with still another embodiment of the invention, a method of securely booting a digital electronic device according to one or more embodiments includes generating a reference clock signal including a series of intervals that each have N clock pulses and generating a randomized clock signal using the reference clock signal. The randomized clock signal is generated by, for each interval of the series of intervals, generating K random values each corresponding to a clock pulse of the interval using a hardware random number generator circuit, switching off each clock pulse of the interval that the corresponds to one of the K random values using a hardware clock gate circuit, and outputting the remaining clock pulses of the interval as the randomized clock signal. The method further includes executing boot instructions using a boot core circuit clocked by the randomized clock signal. Nis a natural number greater than one and *K* is a natural number less than or equal to N.

### BRIEF DESCRIPTION OF THE DRAWINGS

For a more complete understanding of the present invention, and the advantages thereof, reference is now made to the following description taken in conjunction with the accompanying drawings, in which:
FIG. 1 illustrates an example digital electronic device that includes a hardware boot circuit that generates a randomized boot clock using a clock gate circuit, and a boot core circuit that is clocked by the randomized boot clock in accordance with embodiments of the invention;
FIG. 2 illustrates an example clock signal timing diagram showing a reference clock signal and a corresponding random clock signal in accordance with embodiments of the invention;
FIG. 3 illustrates an example digital electronic device that includes a hardware boot circuit having a clock gate circuit with a random number generator, a clock gate, and a finite state machine in accordance with embodiments of the invention;
FIG. 4 illustrates an example digital electronic device that includes a hardware boot circuit having a clock gate circuit with a random number generator, a plurality of clock gates, and a finite state machine in accordance with embodiments of the invention;
FIG. 5 illustrates an example finite state machine which may be included in a clock gate circuit used to generate a randomized boot clock in accordance with embodiments of the invention;
FIG. 6 illustrates another example clock signal timing diagram showing a reference clock signal and a corresponding random clock signal where the interval size is eight and the number of gated pulses per interval is two in accordance with embodiments of the invention;
FIG. 7 illustrates yet another example clock signal timing diagram showing a reference clock signal and a corresponding random clock signal where the interval size is sixteen and the number of gated pulses per interval is two in accordance with embodiments of the invention;
FIG. 8 illustrates still another example clock signal timing diagram showing a reference clock signal and a corresponding random clock signal where the interval size is thirty-one and the number of gated pulses per interval is five in accordance with embodiments of the invention; and
FIG. 9 illustrates an example method of securely booting a digital electronic device that uses a randomized boot clock in accordance with embodiments of the invention.

Corresponding numerals and symbols in the different figures generally refer to corresponding parts unless otherwise indicated. The figures are drawn to clearly illustrate the relevant aspects of the embodiments and are not necessarily drawn to scale. The edges of features drawn in the figures do not necessarily indicate the termination of the extent of the feature.

### DETAILED DESCRIPTION OF ILLUSTRATIVE EMBODIMENTS

The making and using of various embodiments are discussed in detail below. It should be appreciated, however, that the various embodiments described herein are applicable in a wide variety of specific contexts. The specific embodiments discussed are merely illustrative of specific ways to make and use various embodiments, and should not be construed in a limited scope. Unless specified otherwise, the expressions "around", "approximately", and "substantially" signify within 10%, and preferably within 5% of the given value or, such as in the case of substantially zero, less than 10% and preferably less than 5% of a comparable quantity.

Hacking or manipulating system boot is an attractive and proven method for bad actors to gain system access and/or secure information. During the boot process, additional system components are still under reset. For this reason, very distinct power signatures (also current signatures) can be observed. Precise instants at which to attack can be identified (e.g., to manipulate program-counter). It can be difficult to identify the desired power signature with a small number of power traces, due to system noise. For this reason, DPA is often used to magnify tiny correlations between traces and to remove system noise. However, if the power traces are sufficiently different then DPA fails as no correlation exists to leverage with statistical analysis. As a result, temporal obfuscation (e.g., adding noise, changing timing, or altering the order of operations) can be an effective method of combatting DPA attacks.

Temporal obfuscation of the power signature during boot (i.e., masking the secure-boot power signature) can be implemented in a variety of ways, such as by manipulating aspects of clock signals used during the boot process. For example, clock signal unpredictability may be utilized to prevent bad actors from knowing when specific events take place and ultimately protect against attack or tampering. One conventional method of temporal power signature obfuscation uses a random clock network delay to different registers of the crypto-engine, such as an S-box (substitution-box) of a crypto-module. Specifically, the clock network is modified within combinatorial logic blocks by including delay circuits between individual registers. Each delay circuit may include a buffer string or multiple static delay circuits with logic to randomly select different outputs. This can achieve DPA resistance due to varying the power profile (e.g., the leading edge of clock pulses are delayed, varying the timing of different registers and changing the power profile). However, managing individual delays for each register is difficult. Additionally, the use of delays to clock pulses creates significant static timing analysis (STA) challenges which can prevent the clock network from achieving the desired timing constraints and margins for a given circuit design.

Another conventional method of temporal power signature obfuscation introduces clock-division at random intervals. In particular, the frequency of the clock signal is varied during random intervals to change the power signature. Yet, this conventional technique suffers from unpredictable performance penalties caused by varying the interval size. Moreover, the intervals are typically large because frequency division/switching is utilized. The drawback of large intervals is to limit the effectiveness of the power signal obfuscation as the frequency of the clock signal is constant for longer periods of time. Additionally, when clock frequency division is utilized, operation durations are linearly scaled. The ratio of time taken between operations remains the same, which can allow adversaries to filter out the clock frequency variation.

Some conventional methods use pseudo-random number generators. Because the random number generation of pseudo-random number generators is not truly random, some reduction in the effectiveness of the temporal power signature obfuscation is lost by using a pseudo-random number generator.

In accordance with embodiments herein described, the invention proposes to introduce clock randomness at the root node of a clock network (e.g., in a hardware boot circuit used during a secure boot process of a digital electronic device). A reference clock signal is randomized using clock gating (i.e., removing a clock pulse without changing the clock frequency, the clock pulse width, or delaying the following clock pulse). The reference signal is logically divided into intervals with a fixed number of clock pulses per interval. During each interval, a fixed number of pulses are gated. In some embodiments, more than one randomized clock signal is generated at the root node (i.e., with different interval size, gated pulses per interval, different randomization, etc.).

The randomized clock signal may be generated using a random number generator circuit and a clock gate circuit. The random generator circuit may be a true random number generator (e.g., a physical random number generator that includes a physical entropy source). The randomized clock signal may be used to provide a clock signal to a boot core circuit operatively coupled to the clock gate circuit and configured to access an internal memory comprising boot instructions (e.g., as part of a secure boot process).

In contrast to conventional methods, clock randomness is introduced at the root node using clock gating. No modifications to the clock network are needed to create the clock randomness. As a result, circuit design of embodiment systems are simpler and more predictable than conventional methods that modify the clock network. Additionally, punch-through clock gating allows smaller intervals to be used (e.g., compared to conventional methods that utilize large intervals of random duration).

Embodiments of the invention may have one or more advantages over conventional techniques. For example, the introduction of gated clock pulses during each interval of the reference clock signal (e.g., at the root of the clock network for a digital electronic device) adds temporal noise that advantageously varies the precise execution of each instruction/operation for each boot of the system (i.e. a digital electronic device or devices). This may have the benefit of preventing bad actors from pre-launching an attack, as the exact moment to initiate the attack remains unknown.

Another potential advantage of some or all embodiments of the invention is to provide the desired temporal obfuscation of the power signature with a deterministic performance penalty. That is, the interval size and number of gated clock pulses per interval are pre-defined static values for each randomized clock signal used by the system. For this reason, the same number of clock pulses pass though the clock gate circuit during each interval advantageously triggering the same number of operations/instructions to be performed during each interval (a deterministic performance reduction that has the advantage of being tailored to the specific requirements of a given application).

Another potential advantage of the embodiment systems and methods is the security system that remains synchronous to application modules. The implementation is part of the design and requires no additional overheads to the backend, STA, etc. Further, the embodiment systems and methods are transparent and seamless to software/application system.

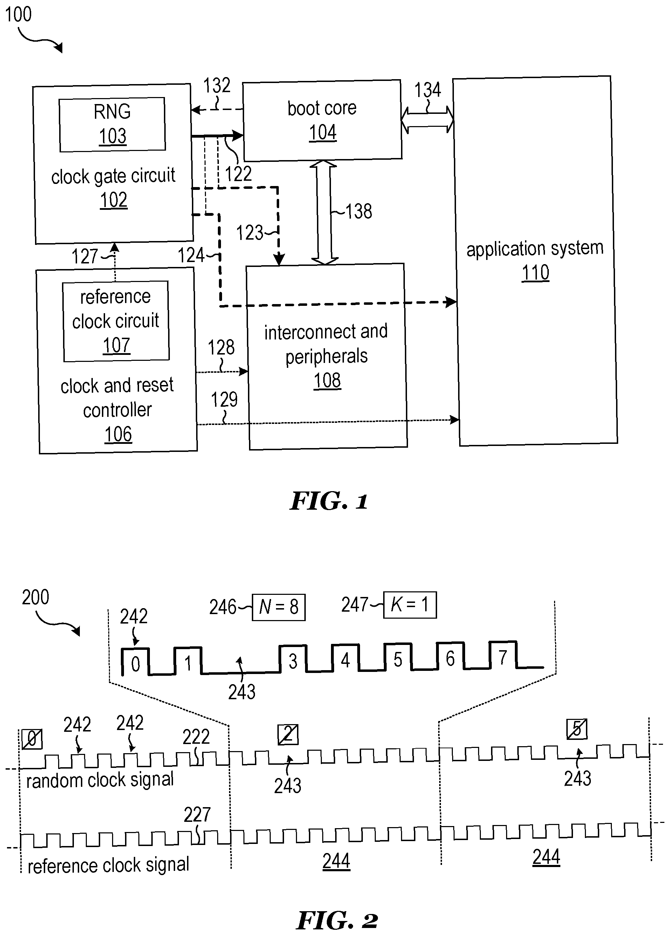

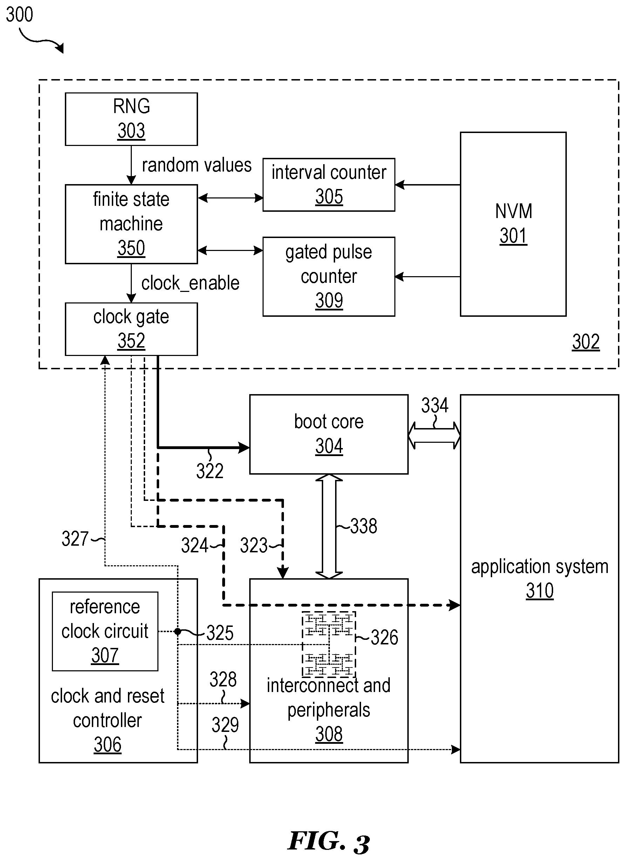

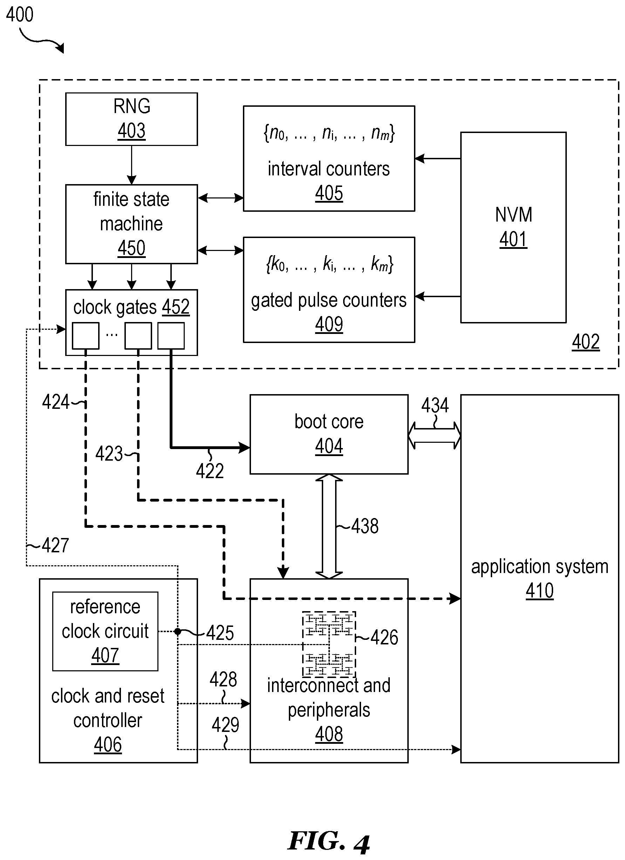

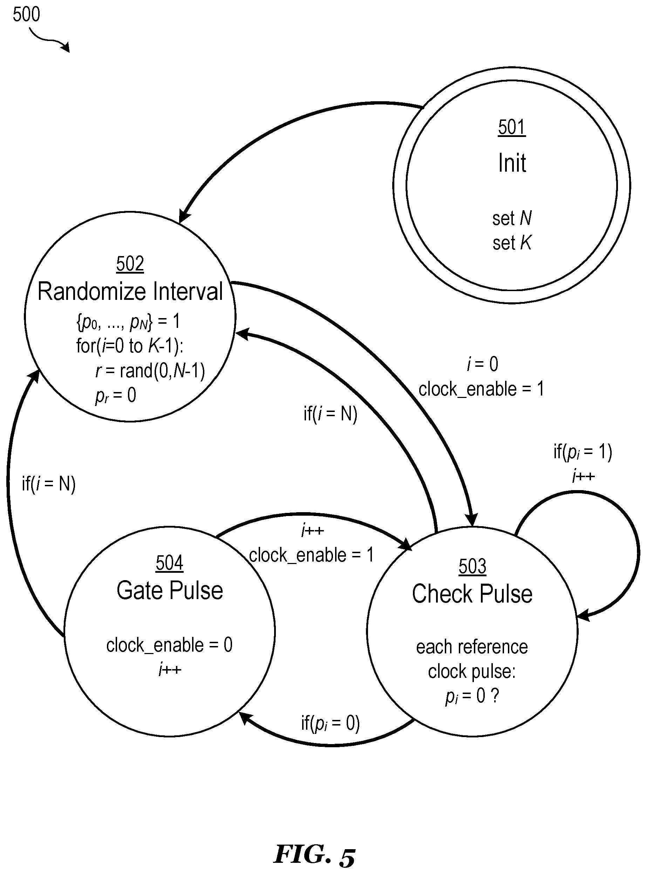

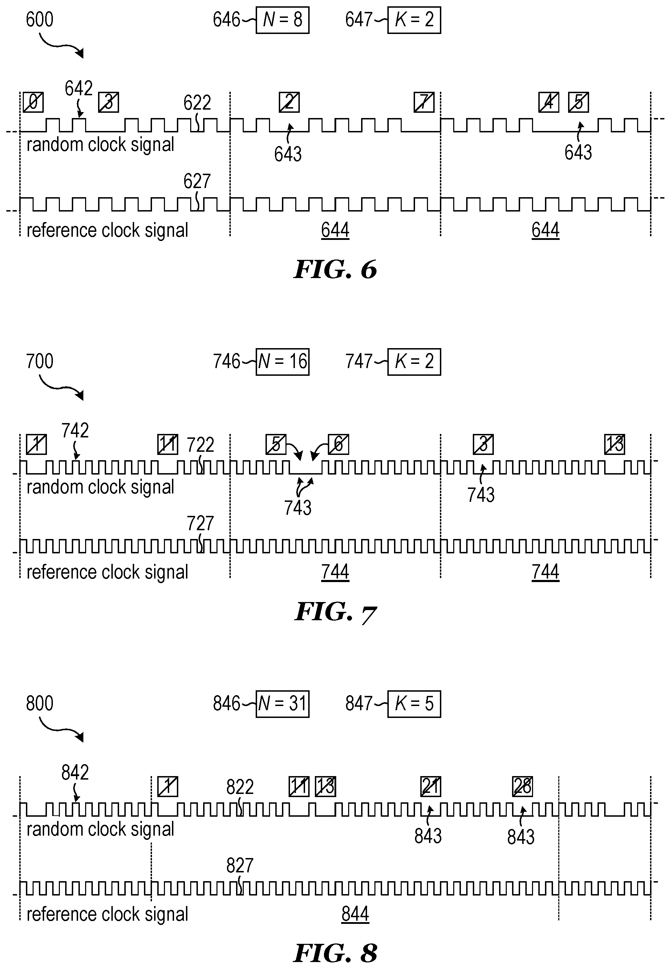

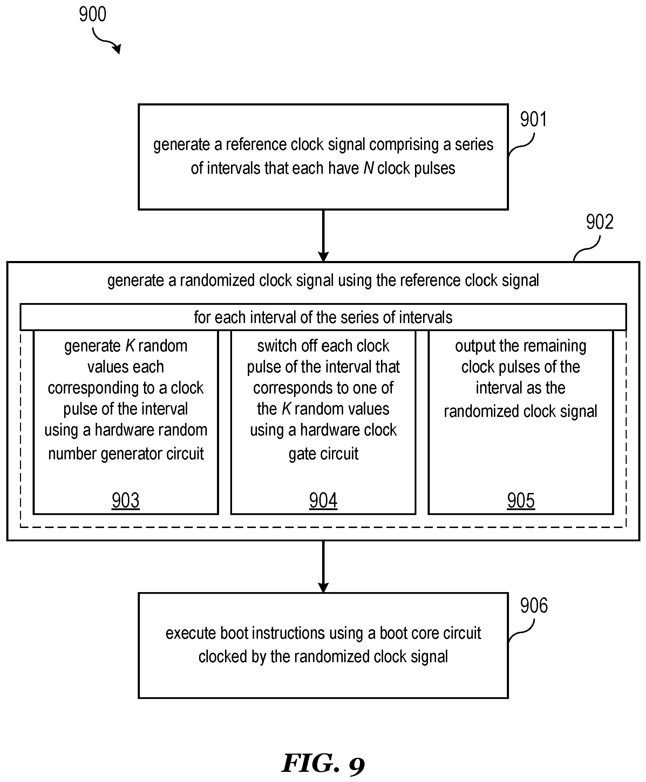

Embodiments provided below describe various hardware boots circuits, and in particular embodiments, hardware boot circuits that include a random number generator circuit and a clock gate circuit configured to generate a randomized clock signal at a root node of a clock network that used by a boot core circuit to access boot instructions from internal memory. The following description describes the embodiments. FIG. 1 is used to describe an example digital electronic device that includes a hardware boot circuit that generates a randomized boot clock using a clock gate circuit, and a boot core circuit that is clocked by the randomized boot clock. An example clock signal timing diagram of a random clock signal is described using FIG. 2. Two more example digital electronic devices that includes a hardware boot circuit are described using FIGS. 3 and 4. An example finite state machine that may be included in a hardware boot circuit of a digital electronic device is described using FIG. 5. Three more example signal timing diagrams are described using FIGS. 6, 7 and 8 while FIG. 9 is used to describe an example method of securely booting a digital electronic device that uses a randomized boot clock.

FIG. 1 illustrates an example digital electronic device that includes a hardware boot circuit that generates a randomized boot clock using a clock gate circuit, and a boot core circuit that is clocked by the randomized boot clock in accordance with embodiments of the invention.

Referring to FIG. 1, a digital electronic device 100 includes a hardware boot circuit that includes a clock gate circuit 102 operatively coupled to a boot core 104 and a controller 106. Although described as a device, it should be recognized that the digital electronic device 100 may also be a digital electronic system, such as a computing system. For example, the digital electronic device 100 may be a microchip, microcontroller, system on a chip (SoC), personal computer, and others.

The controller 106 is configured to provide a reference clock signal 127 to the clock gate circuit 102. For example, the controller 106 may include a reference clock circuit 107 (as shown). The reference clock circuit 107 may also be included in the digital electronic device 100 separate from the controller 106. The controller 106 may also be configured to perform other functions, such as controlling the reset of various components of the digital electronic device 100.

The clock gate circuit 102 receives the reference clock signal 127 and generates a randomized boot clock 122 using a random number generator circuit 103 (RNG). The boot core 104 uses the randomized boot clock 122 as a clock during the boot process (e.g., access an internal memory storing boot instructions and executing the boot instructions to perform a boot process of the digital electronic device 100). The random number generator circuit 103 may be a hardware circuit configured to generate random values (e.g., using physical values prone to random fluctuation of the digital electronic device 100, for example). That is, in one embodiment, the random number generator circuit 103 is a physical random number generator comprising a physical entropy source.

The random number generator circuit 103 could also be implemented using a pseudo-random number generator circuit. However, pseudo-random number generator implementations may receive a clock signal and are not truly random, both of which may be drawbacks for providing the desired degree of protection against bad actors. In contrast, a physical number generator uses physical properties to produce truly random signals and does not require a clock signal.

Although shown as being part of the clock gate circuit 102, the random number generator circuit 103 may also be logically or physically separate from the clock gate circuit 102. For example, in some implementations, the random number generator circuit 103 is also used for other randomization in the digital electronic device 100 and may be implemented as a separate module that is operatively connected to what may be considered the clock gate circuit 102.

The clock gate circuit 102 processes the reference clock signal 127 as a series of intervals that each have N clock pulses (i.e., logically divides the reference clock signal 127 into the intervals), N being a natural number greater than one (i.e., {2, 3, ...}). The intervals are of fixed size; N does not change during the randomization process. For each interval, the clock gate circuit 102 is configured to randomly switch off (also referred to as gate-off or punch-through) at least one clock pulse in each interval (i.e., the clock pulse(s) that are switched off are randomized by the random values from the random number generator circuit 103). The remaining pulses form a randomized clock signal (the randomized boot clock 122). The randomized boot clock 122 is formed at a root node of a clock network. That is, the randomized boot clock 122 is available to the boot core 104 to use as a clock at the root of the boot process. Random clock pulses of the reference clock signal 127 are gated off (punched through) to generate the randomized boot clock 122 that is used by the boot core 104.

The digital electronic device 100 may also include various other types of circuits, such as interconnect and peripherals 108 (e.g., a network of conductive pathways for clock and data signaling, etc.) and an application system 110 (including various processors, such as a central processing unit (CPU), memory, and others). Various components of either of these broad categories may be clocked by either the reference clock signal 127 or a randomized clock. For example, an optional reference peripheral clock 128 and an optional reference system clock 129 may be included in implementations where the boot core 104 is the only component that is clocked with a randomized clock signal. Alternatively, some or all of the interconnect and peripherals 108 and the application system 110 may be clocked with a randomized clock signal, such as an optional random peripheral clock 123 and an optional random system clock 124. As shown, some or all of these randomized clock signals may branch off from the randomized boot clock 122 or (as will be discussed more in the following) any of these randomized clock signals may be generated as a separate signal by the clock gate circuit 102.

The various circuitry of the digital electronic device 100 may be operatively coupled for control and communication in addition to the clock signaling discussed thus far. For example, the boot core 104 may communicate with various components of the application system 110 through a system operative coupling 134. Similarly, the boot core 104 may also communicate with components of the interconnect and peripherals 108 through a peripheral operative coupling 138. In some embodiments, the boot core 104 may be operatively coupled to the clock gate circuit 102 so that the boot core 104 can control some aspect of the clock gate circuit 102 (shown as optional clock gate circuit control 132).

FIG. 2 illustrates an example clock signal timing diagram showing a reference clock signal and a corresponding random clock signal in accordance with embodiments of the invention. The random clock signal of FIG. 2 may correspond to the randomized boot clocks described herein such as the randomized boot clock of FIG. 1, for example. Similarly labeled elements may be as previously described.

Referring to FIG. 2, a clock signal timing diagram 200 schematically illustrates a reference clock signal 227 and a corresponding random clock signal 222 that is produced with a number N of clock pulses per interval 246 equal to eight (*N =* 8) and a number K of gated pulses per interval 247 equal to one (K = 1). Specifically, each interval 244 includes eight clock pulses 242 that are produced at a fixed clock frequency. For each interval 244, a random clock pulse is removed (switched off by a clock gate circuit) based on a random number obtained from a random number generator circuit so that switched-off pulses 243 are included in the random clock signal 222.

Specifically, the location of the clock pulse that is gated for a given interval is not dependent on the previous pulse (it is enabled randomly and may be the same or different than the previous pulse). For example, in the first interval, the first clock pulse is switched off (*p*ₒ = 0), while the third clock pulse and the sixth clock pulse of the second and third intervals are switched off, respectively. It should be mentioned that although the omitted pulses in back-to-back intervals will often be different simply because of the random nature of the random number generator, the same pulse may sometimes be omitted in back-to-back intervals. Of course, the clock gate circuit could also be configured to avoid such a condition, if desired.

The number *N* of clock pulses per interval 246 (i.e., the repetition window) may be selected to be any desired value. For example, for a given application, the number *N* of clock pulses per interval 246 may be based on profiling and performance calculations to achieve the desired levels of protection and performance. In various embodiments, the number *N* of clock pulses per interval 246 is a power of two (e.g., 2³ = 8, 2⁴ = 16, 2⁵ = 32, etc.). However, this is not a strict requirement (and selecting the number *N* of clock pulses per interval 246 to be an odd, prime, or otherwise unusual number in the context of digital computing systems may further protect against attacks).

While in this particular example, the number *K* of gated pulses per interval 247 is chosen to be one, the number *K* of gated pulses per interval 247 may be any natural number within the range of the number *N* of clock pulses per interval 246 (but *K* ≠ *N* since all of the pulses of every interval would be removed). Of course, practical limitations may be present in many applications, as increasing the number *K* of gated pulses per interval 247 is directed correlated with decreasing performance. Therefore, while the full range of possible values have been described, the actual chosen values of *N* and *K* may be selected subject to the specific context of a given application (e.g., the ratio of *K:N* may be kept relatively small, such as 1:8, 1:4, etc.).

In some cases, the number *N* of clock pulses per interval 246 and the number *K* of gated pulses per interval 247 may be selected to tailor the desired randomness while keeping the performance impact constant. For example, *N* = 8 and *K* = 1 has the same (predictable and consistent) performance impact as *N* = 16 and *K* = 2, but the latter may offer a more random power profile. For this reason, in some embodiments, *K* is at least two and often higher.

A random number generator circuit, such as a physical random number generator circuit, may be used to generate the random number. For example, the output of the random number generator may be scaled (e.g., by the clock gate circuit) to produce a natural number in a range spanning the interval size. In the example case presented here, the signal output by the random number generator may be scaled to produce a natural number spanning *N* = 8 possibilities (e.g., 0 to 7). When a physical random number generator is used, the output may be derived from a physical entropy source that can statistically occur over a continuous range of possible values. A function may be applied (e.g., by the clock circuit) to the output of the physical number generator to produce the natural number with equal probability (e.g., truly random without any degree of determinism, in contrast to pseudo-random number generators which have some degree of determinism).

FIG. 3 illustrates an example digital electronic device that includes a hardware boot circuit having a clock gate circuit with a random number generator, a clock gate, and a finite state machine in accordance with embodiments of the invention. The digital electronic device of FIG. 3 may be a specific implementation of other digital electronic devices described herein such as the digital electronic device of FIG. 1, for example. Similarly labeled elements may be as previously described.

Referring to FIG. 3, a digital electronic device 300 includes a hardware boot circuit that includes a clock gate circuit 302 operatively coupled to a boot core 304 and a controller 306. It should be noted that here and in the following a convention has been adopted for brevity and clarity wherein elements adhering to the pattern [x02] where 'x' is the figure number may be related implementations of a clock gate circuit in various embodiments. For example, the clock gate circuit 302 may be similar to the clock gate circuit 102 except as otherwise stated. An analogous convention has also been adopted for other elements as made clear by the use of similar terms in conjunction with the aforementioned numbering system.

The controller 306 is configured to provide a reference clock signal 327 to the clock gate circuit 302 using a reference clock circuit 307. As before, the clock gate circuit 302 receives the reference clock signal 327 and generates a randomized boot clock 322 using a random number generator circuit 303. The boot core 304 uses the randomized boot clock 322 as a clock during the boot process. The randomized boot clock 322 is formed at a root node 325 of a clock network 326 (i.e., a clock tree branching out from a reference clock source). That is, the randomized boot clock 322 is available to the boot core 304 to use as a clock at the root of the boot process. In some embodiments, all of the clock signals in the digital electronic device 300 are randomized. For example, the randomization may be targeted at the fabric/interconnect level (such as having the randomized boot clock 322 connect directly to (and be the only connection to) the root of clock network 326) to randomize all data delays of the digital electronic device 300. In this case, wait flags and/or status flags may be utilized to ensure that there is no data loss. In other embodiments, only some of the clock signals are randomized while others are not. The clock gate circuit 302 includes a non-volatile memory 301 (which may be any suitable implementation, such as read-only memory (ROM) like one-time programmable (OTP) memory, including fuse OTP memory, floating gate OTP, anti-fuse OTP, and others). For example, when the non-volatile memory 301 is OTP memory, the clock gate circuit 302 remains configurable on silicon (until the OTP memory is programmed). Other types of non-volatile memory may also be used. In other embodiments, the non-volatile memory 301 is fully writable memory, although this may in some cases result in decreased security of the system. The non-volatile memory 301 stores the values for the number of clock pulses per interval N and the number of gated pulses per interval *K* that are used to generate the randomized boot clock 322. The non-volatile memory 301 is not able to be modified. However, in some cases programmable memory could be used in place of the non-volatile memory 301.

A finite state machine 350 is coupled to the random number generator circuit 303 and a clock gate 352. The finite state machine 350 is configured to generate a clock_enable signal that the clock gate 352 uses to determine which clock pulses to remove from the reference clock signal 327 to generate the randomized boot clock 322. The finite state machine 350 uses random values from the random number generator circuit 303 along with an interval counter 305 and a gated pulses counter 309 to generate the clock_enable signal.

The digital electronic device 300 may also include various other types of circuits, such as interconnect and peripherals 308 and an application system 310. Various components of either of these broad categories may be clocked by either the reference clock signal 327 or a randomized clock. For example, an optional reference peripheral clock 328 and an optional reference system clock 329 may be included in implementations where the boot core 304 is the only component that is clocked with a randomized clock signal. Alternatively, some or all of the interconnect and peripherals 308 and the application system 310 may be clocked with a randomized clock signal, such as an optional random peripheral clock 323 and an optional random system clock 324. As shown, some or all of these randomized clock signals may branch off from the randomized boot clock 322 or (as will be discussed more in the following) any of these randomized clock signals may be generated as a separate signal by the clock gate circuit 302.

The various circuitry of the digital electronic device 300 may be operatively coupled for control and communication in addition to the clock signaling discussed thus far. For example, the boot core 304 may communicate with various components of the application system 310 through a system operative coupling 334. Similarly, the boot core 304 may also communicate with components of the interconnect and peripherals 308 through a peripheral operative coupling 338.

FIG. 4 illustrates an example digital electronic device that includes a hardware boot circuit having a clock gate circuit with a random number generator, a plurality of clock gates, and a finite state machine in accordance with embodiments of the invention. The digital electronic device of FIG. 4 may be a specific implementation of other digital electronic devices described herein such as the digital electronic device of FIG. 1, for example. Similarly labeled elements may be as previously described.

Referring to FIG. 4, a digital electronic device 400 includes a hardware boot circuit that includes a clock gate circuit 402 operatively coupled to a boot core 404 and a controller 406. The controller 406 is configured to provide a reference clock signal 427 to the clock gate circuit 402 using a reference clock circuit 407. As before, the clock gate circuit 402 receives the reference clock signal 427 and generates a randomized boot clock 422 using a random number generator circuit 403. The boot core 404 uses the randomized boot clock 422 as a clock during the boot process.

The randomized boot clock 422 is formed at a root node 425 of a clock network 426. That is, the randomized boot clock 422 is available to the boot core 404 to use as a clock at the root of the boot process. In some embodiments, all of the clock signals in the digital electronic device 400 are randomized. In other embodiments, only some of the clock signals are randomized while others are not.

The clock gate circuit 402 includes a non-volatile memory 401 (which may be any suitable implementation, such as OTP memory, including fuse OTP memory, floating gate OTP, anti-fuse OTP, and others). In this specific implementation, the clock gate circuit 402 includes multiple clock gates 452 (rather than a single clock gate, which has been shown in previous examples). The non-volatile memory 401 stores the values for the number of clock pulses per interval N and the number of gated pulses per interval K for each clock gate. These are used to generate the randomized boot clock 422 as well as other randomized clocks, such as an optional random peripheral clock 423 and an optional random system clock 424. The additional randomized clocks may have the same parameters (and different randomization having sampled a random number value from the random number generator circuit 403 at a different times) or may have different parameters, (interval size and/or gated pulses per interval).

A finite state machine 450 is again coupled to the random number generator circuit 403 and the clock gates 452. The finite state machine 450 is configured to generate clock_enable signals that the clock gates 452 use to determine which clock pulses to remove from the reference clock signal 427 to generate the randomized clock signals. The finite state machine 450 uses interval counters 405 and gated pulses counters 409 to generate the clock_enable signals.

The digital electronic device 400 may also include various other types of circuits, such as interconnect and peripherals 408 and an application system 410. Various components of either of these broad categories may be clocked by either the reference clock signal 427 or a randomized clock. For example, an optional reference peripheral clock 428 and an optional reference system clock 429 may be included in implementations where the boot core 404 is the only component that is clocked with a randomized clock signal. Alternatively, some or all of the interconnect and peripherals 408 and the application system 410 may be clocked with a randomized clock signal, such as an optional random peripheral clock 423 and an optional random system clock 424. As shown, some or all of these randomized clock signals may branch off from the randomized boot clock 422 or (as will be discussed more in the following) any of these randomized clock signals may be generated as a separate signal by the clock gate circuit 402.

Multiple randomized clock signals may be used to choose independent delays for various circuits/components within the digital electronic device 400. For example, the peripherals 408 and or the application system 410 may include various components, such as accelerators, job-descriptors and processors (e.g., a one central processing unit (CPU), graphics processing unit (GPU), all-purpose processing unit (APU), and specialized processors including application-specific integrated circuits (ASICs) implemented using a field-programmable gate array (FPGA)). Each or the various components may be clocked by a randomized clock signal or the reference clock signal. In one embodiment, independent randomized clock signals from the clock gate circuit are used to clock each of an accelerator, a job-descriptor, and a CPU of the digital electronic device 400.

The various circuitry of the digital electronic device 400 may be operatively coupled for control and communication in addition to the clock signaling discussed thus far. For example, the boot core 404 may communicate with various components of the application system 410 through a system operative coupling 434. Similarly, the boot core 404 may also communicate with components of the interconnect and peripherals 408 through a peripheral operative coupling 438.

FIG. 5 illustrates an example finite state machine which may be included in a clock gate circuit used to generate a randomized boot clock in accordance with embodiments of the invention. The finite state machine of FIG. 5 may be included in the clock gate circuits described herein, such as the clock gate circuit of FIG. 1, for example. Similarly labeled elements may be as previously described.

Referring to FIG. 5, a finite state machine 500 includes an initial state 501 where the interval size N and the number of gated pulses per interval K are set (e.g., reading from OTP memory, for example). In a randomization state 502, the finite state machine 500 obtains K random numbers different from each other in the range [1, N] and populates pulse variables *pᵢ* (with i in the range [1, N]) with either '0' (if i is equal to one of the randomly generated numbers) or '1' (if i is different from all the randomly generated numbers). The finite state machine 500 then moves to a pulse check state 503 where an index variable i is incremented as the pulse variable *p*ᵢ is checked. When *p*ᵢ = 0, the finite state machine 500 moves to a pulse gate state 504 where clock_enable is changed to '0' (e.g., so that the next clock pulse is gated and removed from the clock signal). Thereafter, the finite state machine 500 returns to the pulse check state 503. When i = *N*, the finite state machine 500 moves back to the randomization state 502, since the interval is complete.

The finite state machine 500 may be included in a clock gate circuit of a hardware boot circuit. For example, the finite state machine 500 may be operatively coupled to NVM memory storing parameters for gating clock pulses of a reference clock signal (such as OTP memory, for example). Specifically, one or more interval size values (*N*) and one or more gated pulses per interval values (*K*) may be stored in the NVM memory. Of course, the NVM memory may also store other information, which may be related or unrelated to the randomization of the clock signal. The finite state machine 500 may use counters to keep track of loops that iterate through the interval size and the number of gated pulses. For example, various counters may be coupled between the NVM memory and the finite state machine 500.

FIG. 6 illustrates another example clock signal timing diagram showing a reference clock signal and a corresponding random clock signal where the interval size is eight and the number of gated pulses per interval is two in accordance with embodiments of the invention. The random clock signal of FIG. 6 may correspond to the randomized boot clocks described herein such as the randomized boot clock of FIG. 1, for example. Similarly labeled elements may be as previously described. Referring to FIG. 6, a clock signal timing diagram 600 schematically illustrates a reference clock signal 627 and a corresponding random clock signal 622 that is produced with a number *N* of clock pulses per interval 646 equal to eight (*N =* 8) and a number *K* of gated pulses per interval 647 equal to two (*K* = 2). Specifically, each interval 644 includes eight clock pulses 642 that are produced at a fixed clock frequency. For each interval 644, two random clock pulses are removed (switched off by a clock gate circuit) based on random numbers obtained from a random number generator circuit so that switched-off pulses 643 are included in the random clock signal 622.

FIG. 7 illustrates yet another example clock signal timing diagram showing a reference clock signal and a corresponding random clock signal where the interval size *N* is sixteen and the number *K* of gated pulses per interval is two in accordance with embodiments of the invention. The random clock signal of FIG. 7 may correspond to the randomized boot clocks described herein such as the randomized boot clock of FIG. 1, for example. Similarly labeled elements may be as previously described.

Referring to FIG. 7, a clock signal timing diagram 700 schematically illustrates a reference clock signal 727 and a corresponding random clock signal 722 that is produced with a number *N* of clock pulses per interval 746 equal to sixteen (*N* = 16) and a number *K* of gated pulses per interval 747 equal to two (*K* = 2). Specifically, each interval 744 includes sixteen clock pulses 742 that are produced at a fixed clock frequency. For each interval 744, two random clock pulses are removed (switched off by a clock gate circuit) based on random numbers obtained from a random number generator circuit so that switched-off pulses 743 are included in the random clock signal 722.

FIG. 8 illustrates still another example clock signal timing diagram showing a reference clock signal and a corresponding random clock signal where the interval size *N* is thirty-one and the number *K* of gated pulses per interval is five in accordance with embodiments of the invention. The random clock signal of FIG. 8 may correspond to the randomized boot clocks described herein such as the randomized boot clock of FIG. 1, for example. Similarly labeled elements may be as previously described.

Referring to FIG. 8, a clock signal timing diagram 800 schematically illustrates a reference clock signal 827 and a corresponding random clock signal 822 that is produced with a number *N* of clock pulses per interval 846 equal to thirty-one (*N* = 31) and a number K of gated pulses per interval 847 equal to five (*K* = 5). Specifically, each interval 844 includes thirty-one clock pulses 842 that are produced at a fixed clock frequency. For each interval 844, five random clock pulses are removed (switched off by a clock gate circuit) based on random numbers obtained from a random number generator circuit so that switched-off pulses 843 are included in the random clock signal 822.

FIG. 9 illustrates an example method of securely booting a digital electronic device that uses a randomized boot clock in accordance with embodiments of the invention. The digital electronic devices including hardware boot circuits described herein may be used to perform the method of FIG. 9. The method of FIG. 9 may also be combined with other methods as described herein. For example, the method of FIG. 9 may be combined with any of the embodiments of FIGS. 1-8. Although shown in a logical order, the arrangement and numbering of the steps of FIG. 9 are not intended to be limited. The method steps of FIG. 9 may be performed in any suitable order or concurrently with one another as may be apparent to a person of skill in the art.

Referring to FIG. 9, a method 900 of securely booting a digital electronic device includes a step 901 of generating a reference clock signal comprising a series of intervals that each have *N* clock pulses, *N* being a natural number greater than one. A randomized clock signal is generated in a step 902 using the reference clock signal. In particular, the step 902 is accomplished by performing a step 903, a step 904, and a step 905 for each interval of the series of intervals. The reference clock signal may be generated by a reference clock circuit configured to generate a series of pulses with defined frequency, pulse width, and voltage. Although the pulse frequency and timing of the pulses is not altered by the step 902, in some cases the parameters of the reference clock circuit may alterable (e.g., changing the base clock of the entire system).

In the step 903, *K* random values different from each other (each corresponding to a clock pulse of the interval) are generated using a hardware random number generator circuit, *K* being a natural number less than or equal to *N*. The hardware random number generator may be a physical random number generator circuit that includes a physical entropy suitable as a basis for true random number generation.

In the step 904, each clock pulse of the interval that corresponds to one of the *K* random values is switched off using a hardware clock gate circuit. For example, the hardware clock gate circuit may be operatively coupled to both the hardware random number generator circuit and the reference clock circuit. The hardware clock gate circuit is configured to switch off at least one clock pulse in each interval of the series of intervals to generate the randomized clock signal at a root node of a clock network. The at least one clock pulse that is switched off in each interval is randomized by the random values from the hardware random number generator circuit.

The remaining clock pulses of the interval are output as the randomized clock signal in the step 905. In a step 906, boot instructions are executed using a boot core circuit clocked by the randomized clock signal. For example, the boot core circuit may be operatively coupled to the hardware clock gate circuit and configured to access an internal memory comprising the boot instructions using the randomized clock signal.

Additional steps may be included in some embodiments. For example, the hardware clock gate circuit may be configured to use values stored in NVM memory to generate the randomized clock signal in step 902. In various embodiments, the method 900 includes a step of storing an interval size value equal to *N* in NVM memory of the digital electronic device and storing a number of gated pulses per interval value equal to *K* in the NVM memory. In one embodiment, the NVM memory is OTP memory.

Further, additional randomized clock signals may also be generated. In one embodiment, some or all of the additional randomized clock signals have the same parameters as the first randomized clock signal (but different randomization). That is, *N* and K are equal. In one embodiment, some or all of the additional randomized clock signals have a difference interval size than the first randomized clock signal. In one embodiment, some or all of the additional randomized clock signals have a different number of clocked pulses per interval than the first randomized clock signal.

Example embodiments of the invention are summarized here. Other embodiments can also be understood from the entirety of the specification as well as the claims filed herein.

Example 1. A hardware boot circuit including: a random number generator circuit configured to generate random values; a reference clock circuit configured to generate a reference clock signal including a series of intervals that each have *N* clock pulses, *N* being a natural number greater than one; a clock gate circuit operatively coupled to both the random number generator circuit and the reference clock circuit, the clock gate circuit being configured to switch off at least one clock pulse in each interval of the series of intervals to generate a randomized clock signal at a root node of a clock network, the at least one clock pulse switched off in each interval being randomized by the random values from the random number generator circuit; and a boot core circuit operatively coupled to the clock gate circuit and configured to access an internal memory including boot instructions using the randomized clock signal.

Example 2. The hardware boot circuit of example 1, where the random number generator circuit is a physical random number generator including a physical entropy source.

Example 3. The hardware boot circuit of one of examples 1 and 2, where the clock gate circuit includes a finite state machine operatively coupled to one-time programmable (OTP) memory storing an interval size value equal to *N* and a number of gated pulses per interval value.

Example 4. The hardware boot circuit of example 3, where the clock gate circuit further includes an interval counter and a gated pulse counter operatively coupled between the finite state machine and the OTP memory.

Example 5. The hardware boot circuit of one of examples 1 to 4, where the clock gate circuit includes a plurality of clock gates, each configured to generate a different randomized clock signal.

Example 6. The hardware boot circuit of one of examples 1 to 5, where the at least one clock pulse switched off in each interval is at least two clock pulses.

Example 7. A digital electronic device including: a random number generator circuit configured to generate random values; a reference clock circuit configured to generate a reference clock signal including a series of intervals that each have N clock pulses, N being a natural number greater than one; a clock gate circuit operatively coupled to both the random number generator circuit and the reference clock circuit, the clock gate circuit being configured to switch off at least one clock pulse in each interval of the series of intervals to generate a randomized clock signal at a root node of a clock network, the at least one clock pulse switched off in each interval being randomized by the random values from the random number generator circuit; a boot core circuit operatively coupled to the clock gate circuit and configured to access an internal memory including boot instructions using the randomized clock signal; at least one peripheral operatively coupled to the clock gate circuit; and at least one processor operatively coupled to the clock gate circuit, where the at least one peripheral or the at least one processor are clocked using the randomized clock signal from the clock gate circuit.

Example 8. The digital electronic device of example 7, where the at least one peripheral or the at least one processor are clocked using the same randomized clock signal as the boot core circuit.

Example 9. The digital electronic device of one of examples 7 and 8, where the at least one peripheral or the at least one processor are clocked using a different randomized clock signal than the randomized clock signal used by the boot core circuit.

Example 10. The digital electronic device of example 9, where the clock gate circuit includes a plurality of clock gates, each configured to generate a different randomized clock signal.

Example 11. The digital electronic device of one of examples 9 and 10, where the at least one peripheral and the at least one processor include an accelerator, a job-descriptor, and a central processing unit (CPU), and where independent randomized clock signals from the clock gate circuit are used to clock each of the accelerator, the job-descriptor, and the CPU.

Example 12. The digital electronic device of one of examples 7 to 11, where the randomized clock signal is propagated through at least part of the clock network so that some or all of data delays of the digital electronic device are randomized. Example 13. The digital electronic device of one of examples 7 to 13, where the clock gate circuit includes a finite state machine operatively coupled to one-time programmable (OTP) memory of the digital electronic device, the OTP memory storing an interval size value equal to *N* and a number of gated pulses per interval value.

Example 14. The digital electronic device of one of examples 7 to 13, where the random number generator circuit is a physical random number generator including a physical entropy source.

Example 15. A method of securely booting a digital electronic device, the method including: generating a reference clock signal including a series of intervals that each have *N* clock pulses, *N* being a natural number greater than one; generating a randomized clock signal using the reference clock signal by, for each interval of the series of intervals, generating *K* random values each corresponding to a clock pulse of the interval using a hardware random number generator circuit, *K* being a natural number less than or equal to *N*, switching off each clock pulse of the interval that the corresponds to one of the *K* random values using a hardware clock gate circuit, and outputting the remaining clock pulses of the interval as the randomized clock signal; and executing boot instructions using a boot core circuit clocked by the randomized clock signal.

Example 16. The method of example 15, further including: storing an interval size value equal to *N* in one-time programmable (OTP) memory of the digital electronic device; and storing a number of gated pulses per interval value equal to *K* in the OTP memory.

Example 17. The method of one of examples 15 and 16, generating an additional randomized clock signal using the reference clock signal by, for each interval of the series of intervals, generating *K* random values each corresponding to a clock pulse of the interval using the hardware random number generator circuit, switching off each clock pulse of the interval that the corresponds to one of the *K* random values using the hardware clock gate circuit, and outputting the remaining clock pulses of the interval as the additional randomized clock signal; and providing the additional randomized clock signal to at least one peripheral or at least one processor of the digital electronic device.

Example 18. The method of one of examples 15 to 17, further including: generating an additional randomized clock signal using the reference clock signal by, for each interval of the series of intervals, generating *L* random values each corresponding to a clock pulse of the interval using the hardware random number generator circuit, *L* being a natural number less than or equal to *N* and not equal to *K,* switching off each clock pulse of the interval that the corresponds to one of the *L* random values using the hardware clock gate circuit, and outputting the remaining clock pulses of the interval as the additional randomized clock signal; and providing the additional randomized clock signal to at least one peripheral or at least one processor of the digital electronic device.

Example 19. The method of one of examples 15 to 18, further including: generating an additional randomized clock signal using the reference clock signal divided into a series of additional intervals that each have *M* clock pulses, *M* being a natural number greater than one and not equal to *N*, the additional randomized clock signal being generated by, for each additional interval of the series of additional intervals, generating *L* random values each corresponding to a clock pulse of the additional interval using the hardware random number generator circuit, *L* being a natural number less than or equal to *M* and not equal to *K*, switching off each clock pulse of the interval that the corresponds to one of the *L* random values using the hardware clock gate circuit, and outputting the remaining clock pulses of the interval as the additional randomized clock signal; and providing the additional randomized clock signal to at least one peripheral or at least one processor of the digital electronic device.

Example 20. The method of one of examples 15 to 20, where the hardware random number generator circuit is a physical random number generator including a physical entropy source.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A hardware boot circuit comprising:
a random number generator circuit (103; 303; 403) configured to generate random values;
a reference clock circuit (107; 307; 407) configured to generate a reference clock signal (127; 327; 427) comprising a series of intervals that each have *N* clock pulses, *N* being a natural number greater than one;
a clock gate circuit (102; 302; 402) operatively coupled to both the random number generator circuit (103; 303; 403) and the reference clock circuit (107; 307; 407), the clock gate circuit (102; 302; 402) being configured to switch off at least one clock pulse in each interval of the series of intervals to generate a randomized clock signal (122; 322; 422) at a root node (325; 425) of a clock network (326; 426), the at least one clock pulse switched off in each interval being randomized by the random values from the random number generator circuit (103; 303; 403); and
a boot core circuit (104; 304; 404) operatively coupled to the clock gate circuit (102; 302; 402) and configured to access an internal memory comprising boot instructions using the randomized clock signal (122; 322; 422).

2. The hardware boot circuit of claim 1, wherein the random number generator circuit (103; 303; 403) is a physical random number generator comprising a physical entropy source.

3. The hardware boot circuit of claim 1, wherein the clock gate circuit (102; 302; 402) comprises a finite state machine (350; 450; 500) operatively coupled to one-time programmable, OTP, memory (301; 401) storing an interval size value equal to N and a number of gated pulses per interval value.

4. The hardware boot circuit of claim 3, wherein the clock gate circuit (102; 302; 402) further comprises an interval counter (305; 405) and a gated pulse counter (309; 409) operatively coupled between the finite state machine (350; 450; 500) and the OTP memory (301; 401).

5. The hardware boot circuit of claim 1, wherein the clock gate circuit (102; 302; 402) comprises a plurality of clock gates (452), each configured to generate a different randomized clock signal (422, 423, 424).

6. The hardware boot circuit of claim 1, wherein the at least one clock pulse switched off in each interval is at least two clock pulses.

7. A digital electronic device (100; 300; 400) comprising:
a hardware boot circuit according to any of the previous claims;
at least one peripheral (108; 308; 408) operatively coupled to the clock gate circuit (102; 302; 402) of the hardware boot circuit; and
at least one processor (110; 310; 410) operatively coupled to the clock gate circuit (102; 302; 402) of the hardware boot circuit, wherein the at least one peripheral or the at least one processor are clocked using the randomized clock signal from the clock gate circuit.

8. The digital electronic device (100; 300; 400) of claim 7, wherein the at least one peripheral (108; 308; 408) or the at least one processor (110; 310; 410) are clocked using the same randomized clock signal (122; 322; 422) as the boot core circuit (104; 304; 404) of the hardware boot circuit.

9. The digital electronic device (100; 300; 400) of claim 7, wherein the at least one peripheral (108; 308; 408) or the at least one processor (110; 310; 410) are clocked using a different randomized clock signal (123, 124; 323, 324; 423, 424) than the randomized clock signal (122; 322; 422) used by the boot core circuit (104; 304; 404) of the hardware boot circuit.

10. The digital electronic device (100; 300; 400) of claim 9, wherein the at least one peripheral (108; 308; 408) and the at least one processor (110; 310; 410) comprise an accelerator, a job-descriptor, and a central processing unit, CPU, and wherein independent randomized clock signals from the clock gate circuit are used to clock each of the accelerator, the job-descriptor, and the CPU.

11. The digital electronic device (100; 300; 400) of claim 7, wherein the randomized clock signal is propagated through at least part of the clock network (326; 426) so that some or all of data delays of the digital electronic device (100; 300; 400) are randomized.

12. A method (900) of securely booting a digital electronic device (100; 300; 400) according to any of claims 7 to 11, the method comprising:
generating (901), by the reference clock circuit (107; 307; 407), a reference clock signal (127; 327; 427) comprising a series of intervals that each have *N* clock pulses, *N* being a natural number greater than one;
generating (902) a randomized clock signal (122; 322; 422) using the reference clock signal (127; 327; 427) by, for each interval of the series of intervals:
generating (903) K random values each corresponding to a clock pulse of the interval using the hardware random number generator circuit (103; 303; 403), *K* being a natural number less than or equal to *N*,
switching off (904) each clock pulse of the interval that the corresponds to one of the *K* random values using the hardware clock gate circuit (102; 302; 402), and
outputting (905) the remaining clock pulses of the interval as the randomized clock signal; and
executing (906) boot instructions using the boot core circuit (104; 304; 404) clocked by the randomized clock signal,
wherein the method (900) preferably further comprises:
storing an interval size value equal to *N* in one-time programmable, OTP, memory of the digital electronic device (100; 300; 400); and
storing a number of gated pulses per interval value equal to *K* in the OTP memory.

13. The method (900) of claim 12, further comprising:
generating an additional randomized clock signal using the reference clock signal by, for each interval of the series of intervals:
generating *K* random values each corresponding to a clock pulse of the interval using the hardware random number generator circuit (103; 303; 403),
switching off each clock pulse of the interval that the corresponds to one of the *K* random values using the hardware clock gate circuit (102; 302; 402), and
outputting the remaining clock pulses of the interval as the additional randomized clock signal; and
providing the additional randomized clock signal to the at least one peripheral (108; 308; 408) or the at least one processor (110; 310; 410) of the digital electronic device (100; 300; 400).

14. The method (900) of claim 12, further comprising:
generating an additional randomized clock signal using the reference clock signal by, for each interval of the series of intervals:
generating *L* random values each corresponding to a clock pulse of the interval using the hardware random number generator circuit (103; 303; 403), *L* being a natural number less than or equal to *N* and not equal to *K,*
switching off each clock pulse of the interval that the corresponds to one of the *L* random values using the hardware clock gate circuit (102; 302; 402), and
outputting the remaining clock pulses of the interval as the additional randomized clock signal; and
providing the additional randomized clock signal to the at least one peripheral (108; 308; 408) or the at least one processor (110; 310; 410) of the digital electronic device (100; 300; 400).

15. The method (900) of claim 12, further comprising:
generating an additional randomized clock signal using the reference clock signal divided into a series of additional intervals that each have *M* clock pulses, *M* being a natural number greater than one and not equal to *N*, the additional randomized clock signal being generated by, for each additional interval of the series of additional intervals:
generating *L* random values each corresponding to a clock pulse of the additional interval using the hardware random number generator circuit (103; 303; 403), *L* being a natural number less than or equal to *M* and not equal to *K,*
switching off each clock pulse of the interval that the corresponds to one of the *L* random values using the hardware clock gate circuit (102; 302; 402), and
outputting the remaining clock pulses of the interval as the additional randomized clock signal; and
providing the additional randomized clock signal to the at least one peripheral (108; 308; 408) or the at least one processor (110; 310; 410) of the digital electronic device (100; 300; 400).
